# EUROPEAN PATENT SPECIFICATION

(11) **EP 1 283 196 B1**
(45) Date of publication and mention of the grant of the patent: **07.04.2004**
(21) Application number: 02015854.9
(22) Date of filing: 16.07.2002
(51) Int. Cl.: C03C 25/40, C03C 13/00, E04B 1/76

(54) **Plaster-based façade insulation board**
Gipsdämmstoffplatte für Fassaden
Panneau isolant pour façade à base de plâtre

(30) Priority: 03.08.2001 DE 10138069
(43) Date of publication of application: 12.02.2003
(73) Proprietor: SAINT-GOBAIN ISOVER, 92400 Courbevoie (FR)
(72) Inventor: Bihy, Lothar, 67657 Kaiserslautern (DE); Becker, Michael, 67069 Ludwigshafen (DE); Meyer, Jens, 51429 Bergisch-Gladbach (DE)
(74) Representative: KUHNEN & WACKER

(56) References cited:
- EP-A- 0 017 969
- WO-A-98/30509
- "MINERAL FIBRES DURABLE UNDER HUMID CONDITIONS" RESEARCH DISCLOSURE, KENNETH MASON PUBLICATIONS, HAMPSHIRE, GB, no. 440, December 2000 (2000-12), page 2146 XP001052485 ISSN: 0374-4353

## Description

The invention relates to a plaster-base façade insulation board in accordance with the preamble of claim 1 as well as a heat insulation compound system formed thereby in accordance with the preamble of claim 8, and a method for the production thereof in accordance with the preamble of claim 11.

The like façade insulation boards and heat insulation compound systems are being employed successfully in practical use. The fiber material used is rock wool. The rock wool is deposited on the production conveyor in the customary manner and then crimped, or compressed, in the transport direction so as to obtain an increased orientation of a larger proportion of fibers in the direction of thickness of the mineral wool web. This is followed directly by curing at concurrent reduction to the desired board thickness, whereby the fiber structure is immobilized in the crimped condition. The rock wool boards thus manufactured may be bonded, for example, to the facing of solid masonry to which it is fastened by dowels, whereafter it is possible to apply the plaster which is carried by the façade insulation board. The increased orientation of fibers in the direction of thickness of the board due to the crimping process provides the adherence, or resistance against tearing off, of the rock wool material which has to be demanded against wind suction forces, plaster shrinkage, thermal expansion and the weight of the plaster. Upon application, the plaster penetrates into the open surface of the rock wool panel and becomes anchored there due to interlocking effects.

Such façade insulation boards are known from EP-A-17969.

Such façade insulation boards of rock wool are manufactured at bulk densities of approx. 130 kg/m³ and exhibit high inherent strength. Thanks to the high bulk density, the demanded dowel pull-through strength to be demanded readily exists in the case of fixation with dowels, and in combination with crimping, attaining the demanded adherence equally does not pose a problem.

It is also known to produce such façade insulation boards of rock wool in the form of so-called lamella boards. To this end, the mineral wool is also crimped in the direction of production and cured, however subsequently cut in the direction of production into so-called lamellae, so that the cut width of the individual lamellae determines the thickness of the board thus produced, with the cut surfaces forming the major surfaces of the board. This makes use of the circumstance that upon deposition of the fibers underneath the fiberization unit, a major portion of the fibers, highly predominantly deposited horizontally, is deposited in a transversal direction with respect to the direction of production, so that a lamella contains a multiplicity of fibers extending in the direction of thickness thereof. These fibers are also present in this orientation at the cut surfaces and thus at the major surfaces of the lamellae, whereas in the case of crimped boards they are substantially restricted to the internal region of the board, and fibers oriented in parallel with the surfaces are predominantly present in the range of the major surfaces.

Thanks to this orientation of the fibers in the lamella boards, adherence is extremely high, for the fibers are substantially oriented in a direction from one major surface of the board to the other major surface of the board, so as to transmit tensile forces acting in this direction - as those occurring when a tendency to be torn off exists - as tensile forces into the single fibers. As a result, rock wool lamella boards having a bulk density of, say, 80 kg/m³ may be used and are in particular suited for bonding fixation; at this bulk density a sufficient dowel pull-through strength may, however, also be obtained which allows for fixation by means of dowels such as in cases of a substructure that lacks supportive strength. Such rock wool lamella boards are thus more lightweight than equivalent crimped boards and require a smaller quantity of material, however are not necessarily more cost-efficient in view of the more complicated manufacture, particularly at larger board formats.

While such plaster-base façade insulation boards of rock wool have been found to be excellently suited for practical use, there are difficulties with these rock wool panels to attain thermal conductivity rating 035. Although having a comparatively low bulk density, lamella boards nevertheless have an unfavorable fiber orientation with regard to the thermal insulation capacity, frequently resulting only in attaining thermal conductivity rating 045, however in any case it is not possible to get below thermal conductivity rating 040. Crimped boards, on the other hand, do have a more favorable fiber orientation under aspects of thermal insulation in a transversal direction relative to the direction of heat flux, but have to attain higher adherence values of more than 7 kN/m² and particularly of more than 14 kN/m² through raised bulk densities, which in turn has the result that it is not possible to get below thermal conductivity rating 040. Only in exceptional cases, if an adherence of less than 7 kN/m² is acceptable, thermal conductivity rating 035 may be attained with difficulty by reverting to an uncrimped, laminar board having a relatively low bulk density of only little more than 100 kg/m³.

The use of rock wool instead of glass wool had hitherto been regarded to be indispensable in the like heat insulation compound systems in which the plaster is applied directly onto the open, non-coated surface of the mineral wool board, inasmuch as the plaster contains alkaline constituents which attack glass wool fibers, with rock wool fibers being considerably more resistant in this regard while also being more resistant to ageing. Through its composition , the rock wool in addition also possesses sufficient solubility in the physiological medium (i.e., no biopersistence) as demanded by the legislator. As a result of the required technical demands in terms of application and the various manufacturing methods, alkaline earth-silicate or alkaline earth-alumosilicate glass types having low alkali contents are preferably utilized herefor.

Glass wool is moreover available which, through its composition, possesses sufficient solubility in the physiological medium (i.e., no biopersistence) as demanded by the legislator. Other than in the case of rock wool, alkali-borosilicate glass compositions are preferably utilized herefor.

A simple but characteristic differential feature of glass and rock wool in the sense of sub-groups of the species mineral wool resides in the alkali/alkaline earth ratio of the composition which generally is less than 1 for rock wool and higher than 1 for glass wool. This means that biosoluble rock wool has a high CaO + MgO content of 20 to 30% (wt.), for example, and a relatively low content of Na₂O + K₂O of 5% (wt.), for example. Biosoluble glass wool, on the other hand, as a general rule has alkaline earth proportions of, e.g., 10% (wt.) and alkali proportions of, e.g., more than 15% (wt.).

The plaster has a high lime content which, together, with the silicon also present there, is converted to calcium silicate and thus serves for internal cohesion of the plaster. As a result of the relatively high calcium content of the rock wool and the fact that calcium hydroxide from the plaster attacks the fibers, it is being assumed that calcium silicates which are sparingly soluble and prevent further corrosion of the fibers are formed on the fiber surfaces. The high alkali content of the glass wool, in turn, facilitates alkaline attack and thus homogeneous dissolution of the fiber. Owing to the better alkali resistance of rock wool, the use of glass wool for such plaster-base façade insulation boards having an open, unprotected surface consequently has not been taken into consideration.

In contrast, there were attempts at utilizing the improved thermal insulation capacity of glass wool, so as to more easily attain thermal conductivity rating 035, by providing the plaster-side of a laminar glass wool board with a coating preventing contact of the glass wool with the plaster in the factory. A textile glass netting fabric is incorporated into the coating. This type of façade insulation boards is also being utilized in practice and has been found to be suited quite well for fixation by dowel. The textile glass netting fabric having a mesh width of, e.g., 18 mm x 12 mm, has high tearing strength which is not allowed to decrease by more than 50% at maximum even following artificial ageing in caustic soda solution or alkaline solution. In order to reach across joints, the textile glass netting fabric has to protrude by approx. 10 cm on one respective longitudinal and transversal side each.

The use of this type of coated glass wool-façade insulation board is admissible only in a specified heat insulation compound system with special articulated dowels comprising an insulation material retainer plate having a diameter of 60 mm, and in combination with a plaster specified for the heat insulation compound system. Dowel pull-through strength as well as adherence originates exclusively in the textile glass netting fabric combined with the special articulated dowels with large-sized retainer plates, which is incorporated into the coating in the factory. Due to the fact that the coating is artificially dried extremely rapidly in the course of production in the factory, the alkalinity of the coating mass is not of essential importance.

In this manner, thermal conductivity rating 035 is successfully attained without any problems by a coated and reinforced glass wool-façade insulation board. Hereby, however, one abandons the concept of providing the mineral wool material in such a way that it inherently possesses both the required adherence and dowel pull-through strength in the case of fixation by dowels; instead, use is made of a specialized support construction having the form of the reinforcement embedded in the coating. This system may only be employed in combination with other components of the entire heat insulation compound system specified in advance, whereby its applicability is limited; fixation of the plaster-base façade insulation boards by bonding only is not provided for in this case. In addition, the textile glass netting fabric interferes with cutting operations and necessitates additional quantities of material and additional manufacturing steps during production.

Starting out from the generic prior art with plaster-base façade insulation boards of rock wool as defined in the preamble of claim 1, the invention is based on the object of providing plaster-base facade insulation boards whereby thermal conductivity rating 035 may be attained, without this being accompanied by increased manufacturing expenses and unfavorable limitations and restrictions in the application of the facade insulation boards in the heat insulation compound system.

This object is attained through the characterizing features of claim 1.

On the one hand, the rock wool of the generic prior art is thus replaced with glass wool, and with regard to this feature, use is made of the prior art of facade insulation boards including glass wool and reinforced protective layer. However in accordance with the invention, the glass wool is employed without a protective layer reinforcement and in any case is crimped in the course of its manufacture, and thus is not used in a laminar form as in the known coated glass wool façade insulation boards.

The uncoated glass wool, however, is exposed to alkaline attack by the plaster. But in this regard it was found that alkaline attack may be inhibited by a hydrophobic finish of the glass wool in the sense as demanded for utilization in ventilated façades in accordance with DIN 18165 Part 1 (edition 07.91), item 6.13.

Biodegradable glass fibers with a hydrophobic finish are known from Research Disclosure, no. 440, December 2000, page 2146.

It is assumed that the hydrophobic finish, for example by using silicone oil in a corresponding proportion in the binder, develops a humidity-repellent effect at the fiber surface such that even the alkaline constituents of the plaster, which are aggressive prior to drying, are kept off the fiber surface and thus cannot attack in the manner to be expected per se. Apart from this, the alkaline attack proper by the plaster prior to its drying does not appear to have the outstanding importance in reducing the strength of the glass wool material it had hitherto been ascribed. Experimentation appears to suggest that in an ordinary case, the relatively short period until thorough drying of the plaster is not sufficient to result in massive damage even in the case of untreated glass wool fibers. Rather, hydrolytic attack due to unavoidably and repeatedly penetrating water from driving rain, condensation processes and the like in the course of months and years appears to be of more decisive importance in the sense that these rather hydrolytic attacks may, over extended time periods, bring about a damage to the fiber strength which, although occurring gradually, eventually will be catastrophic. Thanks to the hydrophobic finish in the sense of the otherwise applicable regulation in accordance with DIN 18165 Part 1, this attack is checked or mitigated to such an extent that the required ageing resistance is surprisingly obtained.

In accordance with DIN 18165 it is demanded for utilization in ventilated façades that the water absorption per surface unit should in the average not exceed 1.0 kg/m² after four hours and 4.0 kg/m² after 28 days. In order to verify compliance with these values for the water absorption per surface unit, the water-repellent property is determined on six square test pieces having a side length of 150 mm and the thickness of the insulation layer.

The test pieces are sawed out from three air-dry samples which are to have a thickness of at least 40 mm, while avoiding marginal regions perpendicular to the plane of the insulation layer and without damaging the fibrous structure, so that two respective test pieces are immediately adjacent each other. The top sides of the test pieces are marked. The surfaces are not processed; they may be different from each other on account of the manufacturing process and may differ in water absorption.

Thickness and bulk density are determined on the air-dry test pieces. The test liquid is deionized water in which the presence of any detergents is avoided, and its pH is adjusted to 9.0 by the addition of calcium hydroxide.

The test pieces are immersed horizontally into the test liquid to a depth of 20 mm so that of the two adjacently disposed test pieces, only the top face of the one test piece and the bottom face of the other one is wetted by the test liquid. The test pieces are immobilized in this position.

Following four-hour storage, the test pieces are placed vertically on edge during 15 minutes for draining off and are then weighed. After this, the test pieces are again immersed, with the process being repeated 7 days and 28 days after the first immersion. The weight of the test pieces prior to the first immersion and the respective weights after the single immersion times are used to determine the weight increase on the basis of 1 m², and the average value is obtained.

For hydrophobizing, various measures are known which the person having skill in the art will be familiar with where necessary. In the framework of the present invention, treatment with a silicone emulsion is preferred, with the curing oven being adjusted such that the emulsifying agent will be destroyed under the influence of heat to thereby improve siliconizing. The silicone emulsion is preferably added in a quantity of 0.05 - 0.4% (wt.) of the dry product.

In addition or as an alternative, the presence of an adhesion promoter in the binder equally has a favorable influence on ageing resistance. Thus, for example, silanes as adhesion promoters are introduced with the binder in a quantity of about 0.1% (wt.) of the dry product. Silanes act as adhesion promoters due to the fact that the silicon contained in the silane well couples to silicate surfaces, while the organic groups equally present in the silane establish good connection with organic substances such as the phenolic resin of the binder. As a result, the binding strength of the connection points of the fibers is enhanced by the binder, and accordingly an improved adherence is obtained. In combination with the hydrophobizing effect, these connection points are also protected against alkaline and/or hydrolytic attack.

Crimping or horizontally compressing the mineral wool web on the production conveyor may in the simplest case serve the same purpose as in crimped façade insulation boards of rock wool, namely, to attain an increase of the proportion of fibers oriented in the direction of thickness in the finished board and thus an improved adherence. As a result of the greater fineness of glass wool fibers as compared with rock wool fibers on the one hand, and the greater average fiber lengths on the other hand, it is thus possible to attain the desired adherence at bulk densities between 60 and 100 kg/m³, commonly at about 80 kg/m³. Due to the greater fiber length, dowel pull-through strength does not pose a problem any more.

Crimping of the glass wool web on the production conveyor may at the same time, however, also be employed for a particularly cost-efficient manufacture of very large format lamella boards of the kind in accordance with the invention. For, the reorientation of a higher proportion of fibers in the direction of thickness of the glass wool web brought about by crimping results in a reduced air flow resistance of the glass wool web in the direction of thickness. The relatively high air flow resistance against the hot air circulating in the curing oven for the purpose of curing restricts the curable thickness of the glass wool web. When the web is crimped prior to its entering the curing oven, it is thus possible to cure with a greater web thickness. When lamella strips are subsequently cut which are employed after a 90-degree rotation, then the cutting thickness becomes the thickness of the rotated board, and the thickness of the glass wool web on the production conveyor becomes the board height. Accordingly it is possible to cut lamella boards having larger formats from a thicker glass wool web without having to incur the expense of joining lamella strips into boards of a larger format. This is accompanied by the fact that lamella boards necessitate considerably lower bulk densities for attaining the required adherence due to the orientation of the glass fibers which is extremely favorable in terms of strength. Lamella boards in accordance with the invention may thus be produced at bulk densities of 40 to 60 kg/m³. This relatively low bulk density, in conjunction with the fibers reoriented by crimping, results in such a low specific flow resistance for the hot air that it is globally possible to work with quite considerable thicknesses of the glass wool web in the order of several hundred millimeters in the curing oven; in other words, lamella boards having a comparatively large format even in the height may be cut directly from the glass wool web. Use in accordance with the invention of glass wool instead of rock wool thus surprisingly allows for the production of lamellae with particularly large formats, resulting in corresponding cost advantages in terms of logistics and processing.

In a particularly preferred manner, the cut is executed in the direction of production. Hereby the crimped arrangement of the fibers at the major surfaces of the board becomes visible as a wave shape, while the fibers extending in the direction of thickness, although possibly displaced with regard to their position in the board structure by the crimping, are unchanged in their orientation in the direction of thickness in the lamella board. If the respective end face of the web were instead cut off crosswise to the direction of production so as to form a lamella strip, then the fiber orientation there would be changed in the direction of the thickness of the new, cut lamella strips due to crimping, so that the lamellar character of the lamella board either would not take effect or only have a reduced effect. The increased adherence of the lamella board might then not be obtained or only be obtained in a lesser degree, which would in turn result in the requirement of increasing the bulk density.

In this way, the crimping of the mineral wool web on the production conveyor, to be demanded in accordance with the invention, may thus be utilized both conventionally for producing a crimped board having an increased adherence in comparison with a laminar board of an identical bulk density, or in turn for the cost-efficient production of large-format lamella boards exhibiting structural strength values which are so high that they may be provided at a comparatively very low bulk density and may thus also attain improved thermal conductivity values, although the fibers have the typical unfavorable arrangement of any lamella board under the aspect of heat insulation capacity.

A particular problem results from the fact that the glass wool is to possess a composition which is not biopersistent but has sufficient biosolubility. As a result, the glass fibers are as a general rule particularly susceptible to alkaline and/or hydrolytic attack, for they generally have good solubility not only in the biological medium but also in acids and bases.

It has been found that good ageing resistance nevertheless results in the framework of the invention for non-biopersistent glass fibers having the following compositions (indications in mole %):

| | |
|---|---|
| SiO₂ | 55 to 70 |
| B₂O₃ | 0 to 5 |
| Al₂O₃ | 0 to 3 |
| TiO₂ | 0 to 6 |
| Iron oxides | 0 to 2 |
| CaO | 8 to 24 |
| Na₂O | 10 to 20 |
| K₂O | 0 to 5 |
| Fluoride | 0 to2 |

This applies particularly to glass fibers having the following compositions (in mole %):

| | |
|---|---|
| SiO₂ | 58 to 65 |
| B₂O₃ | 0 to 4 |
| Al₂O₃ | 0 to 1 |
| TiO₂ | 0 to 3 |
| Iron oxides | 0 to 1 |
| MgO | 1 to 4 |
| CaO | 12 to 20 |
| Na₂O | 12 to 18 |
| K₂O | 0.2 to 3 |
| Fluoride | 0 to 1 |

Glass fibers having the following compositions (indications in weight %) also exhibit good ageing resistance in the framework of the invention while moreover being characterized by good fiberization properties even under difficult fiberization conditions (strongly restrictive process conditions) such as, e.g., internal centrifugation:

| | |
|---|---|
| SiO₂ | 57 to 70 |
| Al₂O₃ | 0 to 5 |
| CaO | 5 to 9 |
| MgO | 0 to 5 |
| Na₂O + K₂O | 13 to 18 |
| B₂O₃ | 4 to 12 |
| F | 0 to 1.5 |
| P₂O₅ | 0 to 4 |
| Others | < 2 |

Here the following compositions are preferred (in weight %):

| | |
|---|---|
| SiO₂ | 59 to 68 |
| Al₂O₃ | 0 to 3 |
| CaO | 6 to 9 |
| MgO | 2 to 4 |
| Na₂O | 14 to 17 |
| K₂O | 0 to 2 |
| B₂O₃ | 4 to 11 |
| F | 0 to 1.5 |
| P₂O₅ | 0 to 3 |

The following compositions (in weight %) are particularly preferred:

| | |
|---|---|
| SiO₂ | 60 to 68 |
| Al₂O₃ | 1 to 5 |
| CaO | 6 to 9 |
| MgO | 2 to 4 |
| Na₂O | 14 to 17 |
| K₂O | 0 to 2 |
| B₂O₃ | 4 to 11 |
| F | 0 to 1.5 |
| P₂O₅ | 0.5 to 4 |

or also

| | |
|---|---|
| SiO₂ | 62 to 67.5 |
| Al₂O₃ | 0 to 2.5 |
| CaO + MgO | 9 to 13 |
| Na₂O + K₂O | 14 to 19 |
| B₂O₃ | 4 to 8 |
| F | 0 to 1.5 |
| P₂O₅ | 0 to 2.5 |

For further details concerning these fibers, which are known per se, reference is made to EP-A-0 412 878 which is herewith fully incorporated by reference.

Quite particularly good ageing resistance at nevertheless very good fiberization properties even under difficult conditions is exhibited by non-biopersistent glass fibers of the following compositions (in weight %):

| | |
|---|---|
| SiO₂ | 45 to 60 |
| Al₂O₃ | < 2 |
| CaO + MgO | 10 to 16 |
| Na₂O + K₂O | 15 to 23 |
| B₂O₃ | 10 to 18 |
| P₂O₅ | 0 to 4 |
| BaO | 0 to 1 |
| Diverse | 0 to 2 |

This preferably applies to glass fibers having the following compositions (in weight %):

| | |
|---|---|
| SiO₂ | 47 to 57 |
| Al₂O₃ | < 2 |
| CaO + MgO | 12 to 15 |
| Na₂O + K₂O | 16 to 20 |
| B₂O₃ | 10 to 16 |
| P₂O₅ | 0 to 2 |
| BaO | 0 to 1 |
| Various | 0 to 2 |

It quite particularly applies to glass fibers of the following compositions (in weight %):

| | |
|---|---|
| SiO₂ | 52 to 60 |
| Al₂O₃ | 0 to 1.5 |
| CaO + MgO | 11 to 12.5 |
| Na₂O + K₂O | 16 to 18.5 |
| B₂O₃ | 10 to 14 |
| P₂O₅ | 0 to 1 |
| BaO | 0 to 1 |
| Various | 0 to 2 |

For further details of these fibers, which are known per se, reference is made to WO 95/32927 which is fully incorporated herein by reference.

The invention shall in the following be illustrated by way of two embodiments.
Fig. 1 represents a detail of a plaster-coated façade insulated with the aid of façade insulation boards in accordance with the invention,
Fig. 2 shows a partial sectional view along line II in Fig. 1 of a façade insulation board of the invention having the form of a crimped board,
Fig. 3 shows a corresponding partial sectional view of a façade insulation board of the invention having the form of a lamella board.

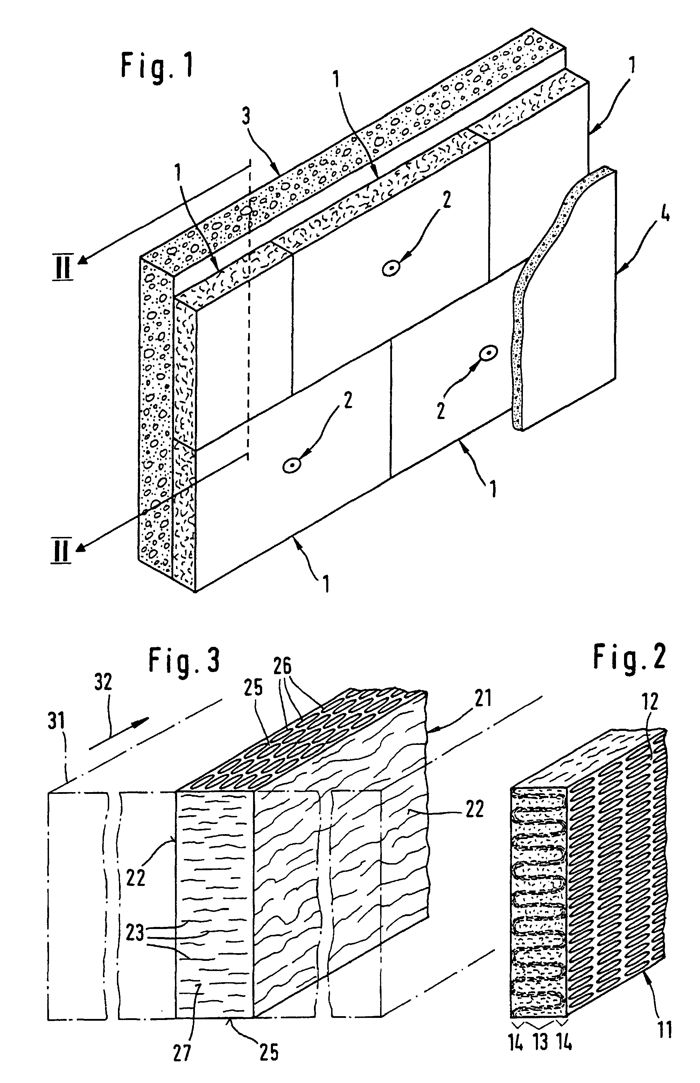

In Fig. 1, plaster-base façade insulation boards 1 are attached to the façade of solid masonry 3 with the aid of schematically illustrated dowels 2. The façade insulation boards 1 are outwardly covered by a plaster coating 4 (in Fig. 1 represented with an exaggerated thickness for better visualization) which is carried by the facade insulation boards 1. Such a fundamental structure of a plaster-base-facade insulation is known and customary, with more detailed explanations accordingly being unnecessary. The dowels 2 may, of course, be arranged and formed in any manner that is suitable and necessary for respective mounting of the façade insulation boards, and with a suitable substructure it is also possible to perform bonding between the façade insulation boards 1 and the facade of the solid masonry 2.

In mounting, the solid masonry 3 is initially covered by laying façade insulation boards 1 in the manner shown, and the façade insulation boards 1 are fastened on the facade of the solid masonry 3, for example with the aid of the dowels 2. After this, the plaster coating 4 is applied on the external surfaces of the façade insulation boards 1, as a general rule in several layers. The weight of the plaster coating 4 as well as the forces acting on the latter, such as in particular wind suction forces, must accordingly be sustained by the fibers of the façade insulation boards 1, with the façade insulation boards 1 in turn being held against the solid masonry 3. The dowel pull-through force consequently must not be lower than a specific value so as to avoid the façade insulation boards 1 together with the plaster coating 4 being lifted off the solid masonry 3 under the influence of theses forces. In addition, the façade insulation boards 1 require a considerable adherence or transversal tensile strength enabling them to absorb the forces acting due to the plaster coating 4.

In accordance with the invention, the façade insulation boards 1 are comprised of bonded glass wool having the lowermost layer of the plaster coating 4 directly applied to the open, i.e. uncoated, surface thereof. The glass wool possesses a hydrophobic finish, as is demanded for application with ventilated façades in accordance with DIN 18165 Part 1. This means that the water absorption per surface unit must in the average not exceed 1.0 kg/m² after four hours and 4.0 kg/m² after 28 hours. Hereby it surprisingly is also possible, when using glass wool for the façade insulation boards 1, to avoid a damaging alkaline and hydrolytic attack on the open glass fibers of the façade insulation boards, as was explained at the outset.

It is essential to achieve good thermal conductivity values for the façade insulation boards 1, wherein thermal conductivity rating 035 should be aspired. As a result, it should be attempted to achieve the required dowel pull-through strength and adherence in manner other than through a high bulk density. The glass wool web accordingly is crimped in the course of fabricating the façade insulation boards 1 and may be employed as a so-called crimped board 11 in accordance with Fig. 2. To this end, following curing the crimped glass wool web, the boards are manufactured by cutting lengths of the glass wool web, with the major surfaces of the mineral wool web also forming the major surfaces 12 of the crimped boards 11. On account of the crimping process, a substantially increased number of glass fibers 13 inside the crimped board 11 is present in an orientation in the direction of the thickness of the board to thus increase the adherence of the façade insulation board 1. Tear-off forces do, however, have to be transmitted via the arcuately arranged, largely surface-parallel fiber regions 14 at the major surfaces 12 of the crimped boards 11, whereby the increase in adherence is limited. On the other hand, the thermal conductivity values are degraded only by the glass fibers 13 arranged in the direction of thickness in the interior region of the crimped board 11, so that both sufficient adherence and sufficient dowel pull-through strength as well as thermal conductivity rating 035 may be obtained by such a crimped board 11 of glass wool at bulk densities between 60 - 100 kg/m³. In the exemplary case, the bulk density of the facade insulation board 1 in accordance with Fig. 2 having the form of a crimped board 11 may be about 80 kg/m³.

In the embodiment according to Fig. 3, the façade insulation board 1 has the form of a lamella board 21. This lamella board is manufactured by producing a glass wool web, as indicated in cross-section by a dash-dotted line and designated as 31, at a very great thickness and cutting it into strips in the direction of production (Arrow 32) which, after cutting lengths from them, form the lamella boards 21. At the upper (and lower) narrow sides 25 of the lamella boards 21, the impressions 26 of the so-called "flights" are recognizable, i.e. of pressure ribbons between which the glass wool web 31 is compressed in the curing oven to the smaller, desired and defined thickness in comparison with the entering unprocessed fibrous web. At the major surfaces 22 of the lamella boards 21 the crimping fold is recognizable. As is visualized by the end face 27 of the lamella board 21, a continuous fiber extension in the direction of thickness from major surface 22 to major surface 22 is present there which is formed by those glass fibers 23 having assumed a horizontal orientation predominantly in the transversal direction to the direction of production (Arrow 32) on the production conveyor underneath the fiberization unit. The plaster coating 4 is applied directly onto the major surfaces 22 of the lamella boards 21 and may there penetrate into the open glass wool surface to become anchored on the glass fibers 23 that are oriented in the direction of thickness.

This results in an excellent adherence which also provides the desired dowel pull-through strength even at bulk densities of 40 kg/m³ and more and - despite the unfavorable fiber orientation in terms of thermal insulation aspects - allows for attaining thermal conductivity rating 035 as a result of the lower bulk density.

In an exemplary case, the bulk density of the lamella board 21 is assumed to be 50 kg/m³.

Due to the open external fiber structure in accordance with the invention at the major surfaces 12, 22 of the facade insulation boards 1, 11, 21 without the intermediary arrangement of any protective layers for avoiding contact of the alkaline plaster with the fibers, there results an intimate anchoring of the plaster on the glass fibers. As a result of the hydrophobic finish, alkaline or hydrolytic attack on the glass fibers is nevertheless surprisingly avoided. In conjunction with the orientation of fibers as a crimped board 11 and in particular as a lamella board 21, a sufficient adherence and dowel pull-through strength is attained even at extremely low bulk densities and therefore at favorable heat conductivity values.

## Claims

1. A plaster-base facade insulation board (1) of mineral wool, the uncoated plaster-base surface of which is usable for direct application of a plaster coating (4), and the fibers of which are crimped in the course of manufacturing said board prior to curing for the formation of mineral fiber crimped boards, such that an elevated proportion of said fibers is oriented in the direction of thickness of the mineral wool web resting on the production conveyor,
**characterized in that**
as said mineral wool, glass wool of non-biopersistent fibers having a ratio of alkali constituents to alkaline earth constituents of greater than 1 is used, and
said glass wool possesses a hydrophobic finish, namely in such a way that water absorption per surface unit on the average does not exceed 1,0 kg/m² after 4 hours and 4.0 kg/m² after 28 days.

2. The plaster-base facade insulation board in accordance with claim 1, **characterized in that** said glass wool is siliconized for hydrophobization.

3. The plaster-base façade insulation board in accordance with claim 2, **characterized in that** said glass wool contains silicone in an amount of less than 1% (wt.) of the dry product, preferably less than 0.6% (wt.), in particular between 0.05 and 0.4% (wt.).

4. The plaster-base façade insulation board in accordance with one of claims 1 to 3, **characterized in that** said glass wool board provided in the form of a crimped board (11) is present with a bulk density of 60 to 100 kg/m³, in particular 70 to 90 kg/m³.

5. The plaster-base façade insulation board in accordance with one of claims 1 to 3, **characterized in that** it has the form of a lamella board (21), on the major surfaces (22) of which the wave-shaped deformation due to crimping is visible.

6. The plaster-base façade insulation board in accordance with claim 5, **characterized in that** said glass wool lamella board (21) is present with a bulk density of 40 to 60 kg/m³.

7. The façade insulation board in accordance with one of claims 1 to 6, **characterized by** the use of glass wool having high solubility in the physiological medium and the following composition (in weight %):
| | |
|---|---|
| SiO₂ | 57 - 70 |
| Al₂O₃ | 0 - 5 |
| CaO | 5 - 9 |
| MgO | 0 - 5 |
| Na₂O + K₂O | 13 - 18 |
| B₂O₃ | 4 - 12 |
| F | 0 - 1.5 |
| P₂O₅ | 0 - 4 |
| Others | < 2 |

8. A heat insulation compound system including plaster-base façade insulation boards (1) in accordance with one of claims 1 to 7 attached in direct surface contact with a substructure such as solid masonry (3), and an external plaster coating (4) carried by said plaster-base façade insulation boards (1), **characterized in that** said plaster coating (4) is applied directly onto the open surfaces of said glass wool boards.

9. The heat insulation compound system in accordance with claim 8, **characterized in that** said glass wool boards are fastened with the aid of dowels (2), the retaining plates of which rest against said glass wool material.

10. The heat insulation compound system in accordance with claim 8, **characterized in that** said glass wool boards are bonded with said substructure at their surfaces facing away from the plaster for fastening.

11. A method for producing a plaster-base façade insulation board in accordance with one of claims 1 to 7, wherein mineral wool is produced from the melt through fiberization with the aid of fiberization units and deposited on a production conveyor while being provided with binder, whereafter said mineral wool web (31) thus formed is crimped in the direction of production (Arrow 32), and said binder is cured in a curing oven, **characterized in that** glass wool is used as said mineral wool, that a silicone emulsion is added to said glass wool underneath said fiberization unit in an amount of 0.05 to 0.4% (wt.) as a hydrophobizing agent, and that the temperature in said curing oven is adjusted such that the emulsifying agent of said silicone emulsion evaporates and said silicone oil remains in the product for hydrophobization.

12. The method in accordance with claim 11, **characterized in that** in order to form a lamella board (21), following its exit from said curing oven said production web (31) is cut in the direction of production (Arrow 32) into strips having a width corresponding to the thickness of said lamella boards (21) to be produced.

## Patentansprüche

1. Putzträger-Fassadendämmplatte (1) aus Mineralwolle, deren unbeschichtete Putzträger-Oberfläche zur direkten Aufbringung einer Putzschicht (4) verwendbar ist, und deren Fasern im Zuge der Herstellung der Platte vor der Aushärtung zur Bildung von Mineralfaser-Stauchplatten derart gestaucht sind, daß sie zu einem erhöhten Anteil in Dickenrichtung der auf dem Produktionsband liegenden Mineralwollebahn ausgerichtet sind,
**dadurch gekennzeichnet,**
**daß** als Mineralwolle Glaswolle aus nicht biopersistenten Fasern mit einem Verhältnis der Alkalibestandteile zu den Erdalkalibestandteilen größer als 1 verwendet ist, und
**daß** die Glaswolle hydrophob ausgerüstet ist, und zwar derart, daß die flächenbezogene Wasseraufnahme im Mittel nach 4 Stunden von 1,0 kg/m² und nach 28 Tagen von 4,0 kg/m² nicht überschritten wird.

2. Putzträger-Fassadendämmplatte nach Anspruch 1, **dadurch gekennzeichnet, daß** die Glaswolle zur Hydrophobierung silikonisiert ist.

3. Putzträger-Fassadendämmplatte nach Anspruch 2, **dadurch gekennzeichnet, daß** die Glaswolle Silikon unter 1 Gew.-% des trockenen Produkts, vorzugsweise unter 0,6 Gew.-%, insbesondere zwischen 0,05 und 0,4 Gew.-% enthält.

4. Putzträger-Fassadendämmplatte nach einem der Ansprüche 1 bis 3, **dadurch gekennzeichnet, daß** die als Stauchplatte (11) vorliegende Glaswolleplatte in einer Rohdichte von 60 bis 100 kg/m³, insbesondere 70 bis 90 kg/m³, vorliegt.

5. Putzträger-Fassadendämmplatte nach einem der Ansprüche 1 bis 3, **dadurch gekennzeichnet, daß** sie als Lamellenplatte (21) ausgebildet ist, an deren Großflächen (22) die wellenförmige Verformung durch die Stauchung erkennbar ist.

6. Putzträger-Fassadendämmplatte nach Anspruch 5, **dadurch gekennzeichnet, daß** die Glaswolle-Lamellenplatte (21) in einer Rohdichte von 40 bis 60 kg/m³ vorliegt.

7. Fassadendämmplatte nach einem der Ansprüche 1 bis 6, **gekennzeichnet durch** die Verwendung von Glaswolle mit einer hohen Löslichkeit im physiologischen Medium und folgender Zusammensetzung (in Gew.-%):
| | |
|---|---|
| SiO₂ | 57 - 70 |
| Al₂O₃ | 0 - 5 |
| CaO | 5 - 9 |
| MgO | 0-5 |
| Na₂O + K₂O | 13 - 18 |
| B₂O₃ | 4 - 12 |
| F | 0 - 1,5 |
| P₂O₅ | 0-4 |
| Diverse | < 2 |

8. Wärmedämmverbundsystem mit an einem Untergrund wie einer Massivwand (3) unmittelbar anliegend befestigten Putzträger-Fassadendämmplatten (1) nach einem der Ansprüche 1 bis 7, sowie mit einer äußeren, von den Putzträger-Fassadendämmplatten (1) getragenen Putzschicht (4), **dadurch gekennzeichnet, daß** die Putzschicht (4) unmittelbar auf die offene Oberfläche der Glaswolleplatten aufgebracht ist.

9. Wärmedämmverbundsystem nach Anspruch 8, **dadurch gekennzeichnet, daß** die Glaswolleplatten mit Dübeln (2) befestigt sind, deren Halteteller auf dem Glaswollematerial aufliegen.

10. Wärmedämmverbundsystem nach Anspruch 8, **dadurch gekennzeichnet, daß** die Glaswolleplatten an ihren dem Putz abgewandten Seiten mit dem Untergrund zur Befestigung verklebt sind.

11. Verfahren zur Herstellung einer Putzträger-Fassadendämmplatte nach einem der Ansprüche 1 bis 7, bei dem Mineralwolle aus der Schmelze durch Zerfaserung mittels Zerfaserungsaggregaten hergestellt und mit Bindemittel versehen auf einem Produktionsband abgelegt wird, wonach die so gebildete Mineralwollebahn (31) in Produktionsrichtung (Pfeil 32) gestaucht und das Bindemittel in einem Aushärteofen ausgehärtet wird, **dadurch gekennzeichnet, daß** als Mineralwolle Glaswolle verwendet wird, daß der Glaswolle unterhalb des Zerfaserungsaggregats eine Silikonemulsion in einer Menge von 0,05 bis 0,4 Gew.-% als Hydrophobierungsmittel zugegeben wird, und daß im Aushärteofen die Temperatur so eingestellt wird, daß der Emulgator der Silikonemulsion sich verflüchtigt und das Silikonöl zur Hydrophobierung im Produkt zurückbleibt.

12. Verfahren nach Anspruch 11, **dadurch gekennzeichnet, daß** zur Bildung einer Lamellenplatte (21) die Produktionsbahn (31) nach dem Verlassen des Aushärteofens in Produktionsrichtung (Pfeil 32) in Streifen geschnitten wird, deren Breite der Dicke der herzustellenden Lamellenplatte (21) entspricht.

## Revendications

1. Panneau d'isolation de façade à base de plâtre (1) en laine minérale, dont la surface à base de plâtre non recouverte est utilisable pour l'application directe d'un revêtement de plâtre (4), et dont les fibres sont crêpées au cours de la fabrication dudit panneau avant le séchage pour la formation de panneaux à fibres minérales crêpées, de telle sorte qu'une proportion importante desdites fibres soient orientées dans la direction de l'épaisseur de la laine de verre se trouvant sur le convoyeur de production,
**caractérisé en ce que**
de même que ladite laine minérale, de la laine de verre en fibres non-biorémanentes ayant un taux de constituants alcalins par rapport aux constituants alcalins terrestres plus grand que 1 est utilisée, et
ladite laine de verre possède un apprêt hydrophobe, c'est-à-dire tel que l'absorption de l'eau par unité de surface ne doit pas en moyenne dépasser 1,0 kg / m² après 4 heures ni 4,0 kg / m² après 28 jours.

2. Panneau d'isolation de façade à base de plâtre selon la revendication 1, **caractérisé en ce que** ladite laine de verre est siliconée pour hydrophobisation.

3. Panneau d'isolation de façade à base de plâtre selon la revendication 2, **caractérisé en ce que** ladite laine de verre contient du silicone en quantité inférieure à 1 % (en poids) du produit sec, préférablement inférieure à 0.6 % (en poids), en particulier entre 0.05 et 0.4 % (en poids).

4. Panneau d'isolation de façade à base de plâtre selon l'une quelconque des revendications 1 à 3, **caractérisé en ce que** le panneau en laine de verre fourni sous la forme de panneau crêpé (11) se présente avec une densité volumique de 60 à 100 kg / m³, en particulier de 70 à 90 kg/ m³.

5. Panneau d'isolation de façade à base de plâtre selon l'une quelconque des revendications 1 à 3, **caractérisé en ce qu'**il présente la forme d'un panneau lamellaire (21), sur les surfaces principales (22) duquel la déformation en forme de vagues due au crêpage est visible.

6. Panneau d'isolation de façade à base de plâtre selon la revendication 5, **caractérisé en ce que** ledit panneau lamellaire se présente avec une densité volumique de 40 à 60 kg / m³.

7. Panneau d'isolation de façade à base de plâtre selon l'une quelconque des revendications 1 à 6, **caractérisé par** l'emploi de laine de verre ayant une solubilité élevée dans le milieu physiologique et la composition suivante ( en % de poids) :
| | |
|---|---|
| SiO₂ | 57 - 70 |
| Al₂O₃ | 0 - 5 |
| CaO | 5 - 9 |
| MgO | 0 - 5 |
| Na₂O + K₂O | 13 -18 |
| B₂O₃ | 4-12 |
| F | 0 - 1,5 |
| P₂O₅ | 0 - 4 |
| Autres | < 2 |

8. Système complexe d'isolation thermique comportant des panneaux d'isolation de façade à base de plâtre (1) selon l'une quelconque des revendications 1 à 7, attachés en contact de surface direct à une infrastructure telle qu'une maçonnerie rigide (3), et un revêtement extérieur de plâtre (4) porté par lesdits panneaux d'isolation de façade à base de plâtre (1), **caractérisé en ce que** ledit revêtement de plâtre (4) est appliqué directement sur les surfaces libres desdits panneaux de laine de verre.

9. Système complexe d'isolation thermique selon la revendication 8, **caractérisé en ce que** lesdits panneaux de laine de verre sont fixés à l'aide de goujons (2), dont les plaques de retenue reposent contre ledit matériau en laine de verre.

10. Système complexe d'isolation thermique selon la revendication 8, **caractérisé en ce que**, pour leur fixation, lesdits panneaux de laine de verre sont collés à ladite infrastructure par leurs surfaces opposées au plâtre.

11. Méthode pour produire un panneau d'isolation de façade à base de plâtre selon l'une quelconque des revendications 1 à 7, dans laquelle la laine minérale est produite à partir de la fusion par défibrage à l'aide d'unités de défibrage et déposée sur un convoyeur de production en même temps qu'elle reçoit un agglomérant , ce après quoi ledit tissu de laine minérale (31) ainsi formé est crêpé dans la direction de production (flèche 32) et ledit agglomérant est séché dans un four de séchage, **caractérisée en ce que** de la laine de verre est employée comme ladite laine minérale, **en ce qu'**une émulsion de silicone est ajoutée à ladite laine de verre au voisinage de ladite unité de défibrage en quantité de 0.05 à 0.4% (en poids) comme agent d'hydrophobisation, et **en ce que** la température dudit four de séchage est réglée de telle façon que l'agent émulsifiant de ladite émulsion de silicone s'évapore et que ladite huile de silicone demeure dans le produit pour son hydrophobisation.

12. Méthode selon la revendication 11, **caractérisée en ce que** dans le but de faire un panneau lamellaire (21), à la suite de sa sortie dudit four de séchage ledit tissu de produit (31) est coupé selon la direction de production (flèche 32) en bandes ayant une largeur correspondant à l'épaisseur desdits panneaux lamellaire à produire.
